(19) Europäisches Patentamt
European Patent Office
Office européen des brevets

(11) **EP 3 607 348 B1**

(12) **EUROPÄISCHE PATENTSCHRIFT**

(45) Veröffentlichungstag und Bekanntmachung des Hinweises auf die Patenterteilung:
**16.10.2024  Patentblatt 2024/42**

(21) Anmeldenummer: **18713935.7**

(22) Anmeldetag: **28.03.2018**

(51) Internationale Patentklassifikation (IPC):
*G01S 17/08* (2006.01)    *G01S 7/4863* (2020.01)
*G01S 7/4914* (2020.01)    *G01S 7/497* (2006.01)

(52) Gemeinsame Patentklassifikation (CPC):
**G01S 17/08; G01S 7/4863; G01S 7/4914; G01S 7/497**

(86) Internationale Anmeldenummer:
**PCT/EP2018/057927**

(87) Internationale Veröffentlichungsnummer:
**WO 2018/184942 (11.10.2018 Gazette 2018/41)**

(54) **LIDAR-VORRICHTUNG UND VERFAHREN ZUM ABTASTEN EINES ABTASTWINKELS UND ZUM AUSWERTEN EINES DETEKTORS**

LIDAR DEVICE AND METHOD FOR SCANNING A SCANNING ANGLE AND FOR EVALUATING A DETECTOR

DISPOSITIF LIDAR ET PROCÉDÉ POUR LE BALAYAGE D'UN ANGLE DE BALAYAGE ET L'ÉVALUATION D'UN DÉTECTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.04.2017  DE 102017206026**

(43) Veröffentlichungstag der Anmeldung:
**12.02.2020  Patentblatt 2020/07**

(73) Patentinhaber: **Robert Bosch GmbH
70442 Stuttgart (DE)**

(72) Erfinder:
• **FINK, Franziska Felicitas
  52428 Juelich (DE)**
• **SCHNITZER, Reiner
  72762 Reutlingen (DE)**
• **HIPP, Tobias
  72379 Hechingen (DE)**

(56) Entgegenhaltungen:
**WO-A1-2011/029651     DE-A1- 102015 205 826
US-A1- 2016 123 764**

EP 3 607 348 B1

**Beschreibung**

Die Erfindung betrifft eine LIDAR-Vorrichtung sowie ein Verfahren zum Abtasten eines Abtastwinkels und zum Auswerten eines ausgewählten Detektorbereiches.

Stand der Technik

Bei LIDAR (Light detection and ranging) - Vorrichtungen wird ein Abstand zwischen der LIDAR-Vorrichtung und einem Objekt ermittelt. Hierzu wird ein Lichtpuls bzw. -strahl erzeugt und entlang eines Abtastwinkels emittiert. Befindet sich innerhalb des Abtastwinkels ein Objekt, so wird der Strahl reflektiert und kann von einem Detektor der LIDAR-Vorrichtung detektiert werden. Die Flugzeit des Strahls von dem Zeitpunkt der Erzeugung bis zum Zeitpunkt der Detektion kann gemessen und basierend auf der Lichtgeschwindigkeit des Strahls in eine Entfernung umgerechnet werden. Dieses Verfahren ist auch als "Time-of-Flight"-Verfahren bekannt. Detektoren in LIDAR-Vorrichtungen bestehen üblicherweise aus zeilenförmigen oder flächigen Matrizen bzw. Arrays aus einer Vielzahl an Detektorpixeln. In biaxialen LIDAR-Vorrichtungen befindet sich Sender und Empfänger auf getrennten optischen Achsen. Der erzeugte Lichtstrahl kann mithilfe eines Spiegels oder eines rotierenden Aufbaus innerhalb eines Gesichtsfeldes abgelenkt werden. Hierdurch kann ein Raumwinkel abgetastet werden. Unter regulären Betriebsbedingungen einer LIDAR-Vorrichtung trifft ein empfangener Strahl auf unterschiedliche Bereiche des Detektors. Ein Detektor wird somit nicht vollständig ausgeleuchtet, sondern grundsätzlich stellenweise. Bei gängigen LIDAR-Vorrichtungen wird zur Verarbeitung des empfangenen Strahls stets die gesamte Fläche des Detektors ausgewertet, da der belichtete Bereich auf dem Detektor und damit die Position des empfangenen Strahls unbekannt sind. Alternativ kann ein Bereich auf dem Detektor für die weitere Auswertung durch mehrere Messungen iterativ eingegrenzt werden. Hierdurch entsteht eine große Datenmenge, die in einem höheren Rechenaufwand bzw. einer langsameren Auswertung von Detektordaten resultieren kann.

US 2016/0123764 A1 beschreibt eine LIDAR-Vorrichtung, welche basierend auf zwei unterschiedlichen Messprinzipien betrieben wird. Für die Detektion von Objekten im Fernfeld wird das Time-of-Flight Messprinzip eingesetzt, bei welchem basierend auf einer Flugdauer der erzeugten Strahlen eine Entfernung des Objekts ermittelt wird. Der zweite Betriebsmodus wird im Nahfeld aktiviert und ermöglicht eine Abstandsmessung basierend auf dem Messprinzip der Triangulation.

WO 2011/029651 A1 offenbart einen biaxialen optischen Flugzeit-Entfernungssensor mit einer Vielzahl von lichtempfindlichen Detektorelementen, deren Größe und Gruppierung zu Pixeln von der zu messenden Entfernung und damit von der Position auf der Detektionsfläche abhängt. So kann die effektive Detektionsfläche bei allen Entfernungen an die Größe des Empfangslichtflecks angepasst und die Entfernungsbestimmung auf die entsprechenden Signale beschränkt werden. Weiterer Stand der Technik ist aus DE 10 2015 205 826 A1 bekannt.

Offenbarung der Erfindung

Die der Erfindung zugrunde liegende Aufgabe kann darin gesehen werden, ein Verfahren und eine LIDAR-Vorrichtung vorzuschlagen, die einen Detektor mit einem verbesserten Dynamikumfang und einer reduzierten Datenmenge bei einer Auswertung von detektierten Strahlen aufweist.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt der Erfindung wird ein Verfahren zum Abtasten eines Abtastwinkels und zum Auswerten eines Detektors bereitgestellt. Bei dem Verfahren wird mindestens ein Strahl durch eine Strahlenquelle zum Abtasten des Abtastwinkels erzeugt. Mindestens ein an einem Objekt reflektierter Strahl wird durch eine Empfangsoptik empfangen und auf eine Detektorfläche des Detektors gelenkt und eine Flugdauer des mindestens einen reflektierten Strahls ermittelt. Der mindestens eine empfangene Strahl wird anschließend ausgewertet, wobei mindestens ein Bereich der Detektorfläche zum Auswerten des mindestens einen empfangenen Strahls abhängig von der Flugdauer des mindestens einen empfangenen Strahls ausgewählt wird.

Abhängig von der Distanz des Objektes bzw. Zielobjekts zum Detektor trifft der empfangene Strahl an unterschiedlichen Stellen der Detektorfläche des Detektors auf. Der auf die Detektorfläche aufgetroffene empfangene Strahl stellt hierbei je nach Form des Strahls einen Messpunkt oder eine Messfläche dar. Durch geometrische Zusammenhänge zwischen dem Strahlenerzeuger, dem Detektor und einem Objekt, an dem mindestens ein erzeugter Strahl reflektiert werden, kann mit Hilfe der Flugzeit des erzeugten Strahls vom Zeitpunkt der Erzeugung bis zum Zeitpunkt der Detektion der Ort bzw. Bereich bestimmt werden, an dem der reflektierte Strahl auf der Detektorfläche auftreffen kann. Dies ist insbesondere durch den konstanten und bekannten Abstand zwischen dem Strahlenerzeuger und dem Detektor möglich, weil sich hierdurch der Einfallswinkel, unter dem ein reflektierter Strahl über eine Empfangsoptik oder direkt auf die Detektorfläche fällt ändert. Mit variierendem Einfallswinkel des reflektierten Strahls entsteht eine Abweichung des Bereiches, auf den der reflektierte Strahl trifft. Diese Abweichung ist direkt von der Flugzeit bzw. der Entfernung des Objektes von dem Detektor abhängig. Es kann somit durch das Ermitteln der Flugzeit des erzeugten Strahls eine Vorhersage über den Bereich auf der Detektorfläche getroffen werden, auf dem der reflektierte Strahl auftreffen wird. Hierdurch ist es nicht nötig die gesamte Detektorfläche für die weitere Auswertung des reflektierten Strahls auszuwerten. Vielmehr kann durch das Verfahren ein Bereich auf der Detektorfläche ausgewählt werden, der vorzugsweise kleiner als die Detektorfläche ist. Da nicht mehr die gesamte Detektorfläche zum Auswerten des Strahls verwendet wird, kann die Menge an Messwerten reduziert und die Auswertung bzw. Verarbeitung des detektierten Strahls beschleunigt werden. Im Falle einer parallelen Auswertung mehrerer detektierter reflektierter Strahlen kann die Anzahl an auszuwertenden Detektorpixeln und damit der Schaltungsaufwand reduziert werden. Im Falle einer sequenziellen oder seriellen Auswertung kann die Auswertung beschleunigt werden.

Der mindestens eine Bereich der Detektorfläche wird abhängig von der Lichtgeschwindigkeit, einer Brennweite der Empfangsoptik und einem Abstand zwischen der Strahlenquelle und dem Detektor gewählt. In der Praxis ist die Entfernung zwischen dem Strahlenerzeuger und dem Objekt im Vergleich zur Distanz zwischen dem Strahlenerzeuger und dem Detektor größer, was in einem kleinen Einfallswinkel des reflektierten Strahls resultiert. Der Bereich auf der Detektorfläche, auf den der reflektierte Strahl auftrifft, verschiebt sich mit kleiner werdendem Abstand des Objektes zur Strahlenquelle von einem initialen Bereich. Diese kontinuierliche Verschiebung bzw. Abweichung kann durch einen Quotienten aus einem Produkt aus einer Brennweite der Empfangsoptik und dem Abstand zwischen dem Detektor und der Strahlenquelle und dem Abstand des Objektes zur Strahlenquelle berechnet werden. Hier kann der Abstand zwischen dem Objekt und dem Strahlenerzeuger alternativ als ein Produkt zwischen der Lichtgeschwindigkeit und der Flugdauer des erzeugten Strahls formuliert werden.

Gemäß einem Ausführungsbeispiel wird abhängig von der Flugdauer des mindestens einen empfangenen Strahls der mindestens eine ausgewählte Bereich entlang der Detektorfläche in mindestens einer Dimension verschoben. Somit können nach dem Erzeugen des Strahls an der Strahlenquelle, die Bereiche auf der Detektorfläche als Funktion der Flugdauer von einer definierten Seite der Detektorfläche oder einem Detektorrand zu einer gegenüberliegenden Seite der Detektorfläche aktiviert werden um den reflektierten Strahl detektieren zu können. Der Bereich auf der Detektorfläche kann hierbei vorzugsweise eine Spalte auf dem Detektor sein. Hierdurch kann ein Schaltungsaufwand des Detektors reduziert werden. Der Detektor wird vorzugsweise lediglich im ausgewählten bzw. berechneten Bereich aktiviert. Außerhalb des gewählten Bereiches bleibt der Detektor deaktiviert. Vorzugsweise wird der aktivierte und zum Detektieren des reflektierten Strahls bereite Bereich in mindestens einer Dimension entlang der Detektorfläche verschoben.

Nach einem weiteren Ausführungsbeispiel des Verfahrens wird eine Empfindlichkeit der Detektorpixel des Detektors abhängig von der Flugdauer des mindestens einen empfangenen Strahls gewählt. Basierend auf der Erkenntnis, dass der reflektierte Strahl bei einer geringen Entfernung des Objektes von der Strahlenquelle zu einer bestimmten Seite der Detektorfläche tendiert und bei einer großen Entfernung zu einer gegenüberliegenden Seite der Detektorfläche, ist es vorteilhaft, wenn die Detektorfläche eine variable Empfindlichkeit aufweist. Der Bereich der Detektorfläche, auf den die reflektierten Strahlen aus einer größeren Entfernung auftreffen, kann empfindlicher ausgeführt sein, da in einem Fernbereich die Intensität des reflektierten Strahls nachlässt. Der Bereich der Detektorfläche, auf den die reflektierten Strahlen aus einer geringen Entfernung des Objektes von der Strahlenquelle auftreffen, kann hingegen aufgrund der höheren Intensität des in einem Nahbereich reflektierten Strahls weniger sensitiv ausgeführt sein, um ein Übersättigen des Detektors zu vermeiden. Hierdurch kann insbesondere der Dynamikumfang des Detektors erhöht werden, sodass der Detektor sowohl bei weit entfernten Objekten als auch bei nahen Objekten stets optimale Detektionscharakteristik aufweist.

Gemäß einem weiteren Ausführungsbeispiel wird die Fläche des zum Auswerten des empfangenen Strahls gewählten Bereiches der Detektorfläche abhängig von Störreflexen vergrößert oder verkleinert. Hierdurch kann die Fläche des Bereiches derart eingegrenzt oder angepasst werden, dass Störreflexe auf deaktivierte Bereiche der Detektorfläche treffen. Hierdurch können Fehldetektionen, die durch Umgebungslicht verursacht werden, verhindert werden.

Nach einem weiteren Aspekt der Erfindung wird eine LIDAR-Vorrichtung zum Durchführen des Verfahrens zum Abtasten eines Abtastwinkels und zum Auswerten eines Detektors gemäß dem vorherigen Aspekt der Erfindung bereitgestellt. Die LIDAR-Vorrichtung weist mindestens eine Strahlenquelle zum Erzeugen mindestens eines Strahls und eine Einheit zum Abstrahlen des erzeugten Strahls in einen Abtastwinkel auf. Des Weiteren weist die LIDAR-Vorrichtung eine Empfangsoptik zum Empfangen von mindestens einem an einem Objekt reflektierten Strahl und zum Ablenken des empfangenen Strahls auf eine Detektorfläche eines Detektors auf, wobei abhängig von einer Flugdauer des mindestens einen empfangenen Strahls ein Bereich der Detektorfläche zum Auswerten des mindestens einen empfangenen Strahls auswählbar ist.

Bei biaxialen LIDAR-Vorrichtungen wird ein reflektierter Strahl je nach Entfernung des Objektes bzw. Zielobjekts auf variierenden Stellen der Detektorfläche des Detektors abgebildet. Die Position des Messpunktes auf der Detektorfläche wird kontinuierlich in eine Richtung verschoben, wenn sich die Distanz zwischen Zielobjekt und der LIDAR-Vorrichtung kontinuierlich verändert. Befindet sich die Strahlenquelle beispielsweise links vom Detektor so verschiebt sich die Position des empfangenen Strahls auf der Detektorfläche von rechts nach links, wenn sich das Zielobjekt von dem Detektor entfernt und von links nach rechts wenn diese Distanz verringert wird. Diese Position des auf der Detektorfläche empfangenen Strahls kann basierend auf der Flugdauer des empfangenen Strahls durch Berechnung vorhergesagt werden. Durch die genaue Kenntnis des Bereiches auf der Detektorfläche des Detektors, auf den der empfangene Strahl auftrifft, muss nicht mehr die gesamte Detektorfläche für eine Auswertung des empfangenen Strahls verwendet werden, sondern ein flächig begrenzter Teilbereich der Detektorfläche. Hierdurch kann die Menge an Messwerten, die der Detektor erzeugt bzw. die zum weiteren Auswerten verwendet werden, reduziert werden.

Nach einem Ausführungsbeispiel der LI DAR-Vorrichtung weist die Detektorfläche mindestens zwei über die Detektorfläche verteilte Detektorpixel auf. Vorzugsweise besteht die Detektorfläche des Detektors aus mehreren Detektorpixeln, die über die Detektorfläche regelmäßig oder unregelmäßig verteilt sind. Detektorpixel können beispielsweise Dioden oder Pixel von beispielsweise CCD oder CMOS Sensoren und dergleichen sein.

Gemäß einem weiteren Ausführungsbeispiel weist der für die Auswertung des empfangenen Strahls gewählte Bereich der Detektorfläche mindestens einen Detektorpixel auf. Hierdurch wird verhindert, dass ein Bereich gewählt wird, der physikalisch einen empfangenen Strahl nicht mehr erfassen kann. Es können somit Messdaten mindestens eines Detektorpixels für weitere Auswertung des empfangenen Strahls verwendet werden.

Gemäß einem weiteren Ausführungsbeispiel der LIDAR-Vorrichtung ist eine Empfindlichkeit der Detektorpixel entlang des Detektors variabel ausgeführt. Bei einem Objekt, das sich weit von der Strahlenquelle befindet, weisen die reflektierten Strahlen eine geringere Intensität auf, wenn sie empfangen werden als reflektierte Strahlen, die an nahen Objekten reflektiert werden. Somit können die Detektorpixel eine variable Empfindlichkeitsverteilung über die Detektorfläche hinweg aufweisen. Insbesondere Bereiche der Detektorfläche, die einen Fernbereich abdecken, können eine höhere Empfindlichkeit aufweisen und die Bereiche der Detektorfläche, die einen Nahbereich detektieren, können weniger empfindlich ausgeführt sein. Hierdurch können auch weit entfernte Objekte eindeutig detektiert werden und gleichzeitig ein Überbelichten bzw. ein Erreichen einer Sättigungsgrenze der Detektorpixel des Detektors bei nahen Objekten unterbunden werden. Durch die variable Empfindlichkeitsverteilung der Detektorpixel kann ein Dynamikumfang bzw. ein Arbeitsbereich des Detektors erhöht werden.

Gemäß einem weiteren bevorzugten Ausführungsbeispiel ist die Empfindlichkeit der Detektorpixel entlang des Detektors an die Flugdauer des mindestens einen empfangenen Strahls anpassbar. Hierbei kann die Lichtsensitivität bzw. Empfindlichkeit der einzelnen Detektorpixel auf der Detektorfläche angepasst werden. Da die Strahlenquelle und der Detektor immer im gleichen Abstand und Winkel zueinander angeordnet sind, wird mindestens ein Messsignal von Objekten im Fern- bzw.

Nahbereich immer in gleichen Bereichen auf der Detektorfläche erzeugt. Das bedeutet Detektorbereiche, die reflektierte Strahlen von Objekten im Fernbereich detektieren, können lichtsensitiver ausgeführt sein als in Bereichen, die reflektierte Strahlen von Objekten im Nahbereich detektieren. Dadurch kann eine Sättigungsgrenze erhöht bzw. der lineare Arbeitsbereich des Detektors erweitert werden. Die variable Empfindlichkeit kann beispielsweise über verschiedene Dioden-Typen, verschiedene Arbeitspunkte der Detektorpixel oder durch verschiedene Füllfaktoren erreicht werden. Füllfaktoren entsprechen hierbei dem Verhältnis der fotoaktiven Fläche zur gesamten Detektorfläche. Beispielsweise kann die Empfindlichkeit der Detektorfläche proportional zum Quadrat des Abstands des Objektes von der Strahlenquelle oder linear ausgeführt sein.

Nach einem weiteren Ausführungsbeispiel der LIDAR-Vorrichtung ist der Bereich des Detektors eine Spalte aus mindestens einem Detektorpixel. Hierdurch kann ein Bereich in Form einer Spalte, die eine gesamte Höhe der Detektorfläche einnimmt, ausgeführt sein. Somit kann der für die Auswertung ausgewählte Bereich abhängig von der Flugdauer des empfangenen Strahls in zumindest einer Dimension entlang der Detektorfläche verschoben werden. Hierdurch kann der Schaltungsaufwand für das Anpassen des gewählten Bereiches reduziert werden und die Auswahl der relevanten Messdaten technisch vereinfacht werden.

Im Folgenden werden anhand von stark vereinfachten schematischen Darstellungen bevorzugte Ausführungsbeispiele der Erfindung näher erläutert. Hierbei zeigen:

Fig. 1    eine schematische Darstellung einer LIDAR-Vorrichtung gemäß einem ersten Ausführungsbeispiel,

Fig. 2    eine schematische Darstellung eines Detektors gemäß einem zweiten Ausführungsbeispiel und

Fig. 3    eine schematische Darstellung eines Detektors gemäß einem dritten Ausführungsbeispiel

In den Figuren weisen dieselben konstruktiven Elemente jeweils dieselben Bezugsziffern auf.

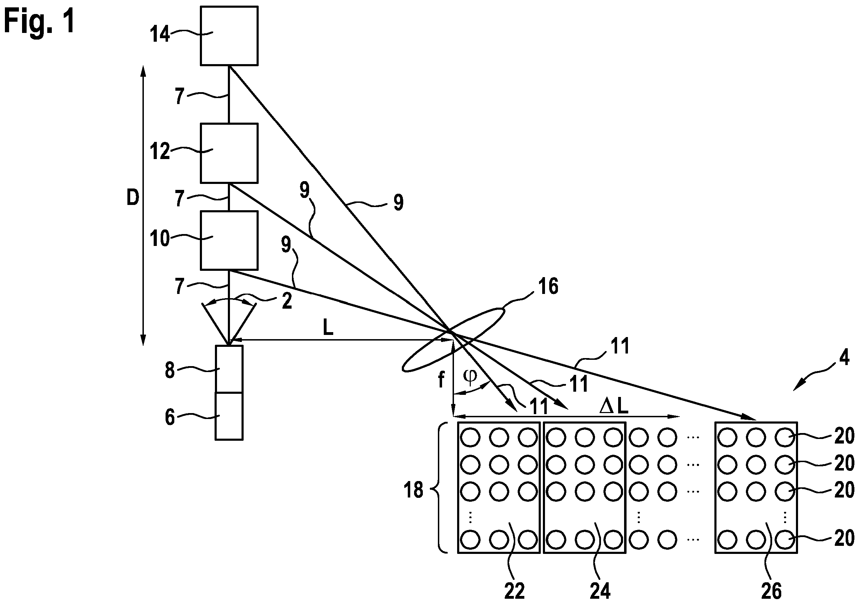

Figur 1 zeigt eine schematische Darstellung einer LIDAR-Vorrichtung 1 gemäß einem ersten Ausführungsbeispiel. Die LIDAR-Vorrichtung 1 dient insbesondere zum Durchführen eines Verfahrens zum Abtasten eines Abtastwinkels 2 und zum Auswerten eines Detektors 4. Gemäß dem Ausführungsbeispiel weist die LIDAR-Vorrichtung 1 eine Strahlenquelle 6 auf, die ein Infrarot-Laser 6 ist. Die Strahlenquelle 6 kann gepulste oder kontinuierliche elektromagnetische Strahlen 7 bzw. Infrarotstrahlen 7 erzeugen. Die Strahlen 7 werden über eine Einheit 8 in den Abtastwinkel 2 abgestrahlt. Die Einheit 8 ist gemäß dem Ausführungsbeispiel eine Kollimationsoptik. Zusätzlich kann Einheit 8 einen schwenkbaren Spiegel, der al-ternativ ein statischer Spiegel sein kann, ein Filter, ein Prisma und dergleichen beinhalten. Die Einheit kann optional eine Austrittsrichtung des Strahls 7 verändern, sodass der Strahl 7 vorzugsweise den gesamten Abtastwinkel 2 belichtet.

Sofern ein Objekt 10, 12, 14 im Abtastwinkel 2 positioniert ist, wird der erzeugte Strahl 7 an dem Objekt 10, 12, 14 reflektiert. Der erzeugte Strahl 7 wird nach dem Auftreffen auf das Objekt 10, 12, 14 zu einem reflektierten Strahl 9. Der reflektierte Strahl 9 wird anschließend von einer Empfangsoptik 16 empfangen. Die Empfangsoptik 16 ist hier der Einfachheit halber als eine konvexe Linse 16 dargestellt. Die Empfangsoptik 16 kann ein optisches Linsensystem sein, welches auch beschichtete Linsen, Spiegel, Filter, diffraktive optische Elemente und dergleichen aufweist. Die reflektierten Strahlen 9 werden von der Empfangsoptik 16 empfangen und als empfangene Strahlen 11 auf den Detektor 4 gelenkt. Die Empfangsoptik 16 kann hierbei starr oder dynamisch bzw. analog zur Einheit 8 beweglich ausgeführt sein. Die reflektierten Strahlen 9 treffen hierbei unter einem Einfallswinkel φ auf die Empfangsoptik 16. Die Empfangsoptik 16 ist in einem definierten Abstand L zu der Strahlenquelle 6 angeordnet und weist eine Brennweite f auf. Die Detektorfläche 18 ist hier durch die Brennweite f von der Empfangsoptik 16 beabstandet. Der Übersicht halber wurde in der Figur keine Brechung oder Beugung der reflektierten Strahlen 9 durch die Empfangsoptik 16 dargestellt.

Gemäß dem Ausführungsbeispiel ist von dem Detektor 4 eine Detektorfläche 18 dargestellt. Die Detektorfläche 18 weist eine Vielzahl an Detektorpixeln 20 auf und dient zum Detektieren von empfangenen Strahlen 11. Die Detektorpixel 20 sind hier beispielsweise Fotodioden. Alternativ können die Detektorpixel 20 auch die Pixel eines CCD oder CMOS Sensors sein. Hierbei sind alle Detektorpixel 20 auf der Detektorfläche 18 gleich ausgeführt und gleichmäßig über die Detektorfläche 18 verteilt. Die Detektorpixel 20 bilden vielmehr eine Matrix aus mehreren Zeilen und Spalten. Abhängig von der Entfernung D der Strahlenquelle 6 bzw. der Abstrahleinheit 8 von einem Objekt 10, 12, 14 weisen die reflektierten Strahlen 9 einen unterschiedlichen Einfallswinkel φ auf, unter dem die reflektierten Strahlen 9 auf die Empfangsoptik 16 bzw. auf den Detektor 4 auftreffen. Abhängig von der Entfernung D des Objektes 10, 12 ,14 treffen die empfangenen Strahlen 11 auf unterschiedliche Bereiche 22, 24, 26 der Detektorfläche 18 auf. Je näher ein Objekt 10, 12, 14 an der Strahlenquelle 6 positioniert ist, desto weiter von einer linken Seite 28 der Detektorfläche 18 wird der empfangene Strahl 11 auftreffen. Der Abstand ΔL von der linken Seite der Detektorfläche 18 kann somit anhand der folgenden Formel berechnet werden:

$$\Delta L = f \cdot L \,/\, D$$

Wobei der Abstand D durch die Flugdauer t des erzeugten Strahls 7 ausgehend von der Strahlenquelle 6 bzw. der Einheit 8 bis zum Auftreffen auf den Detektor 4 ausgedrückt werden kann:

$$\Delta L = 2 \cdot f \cdot L \,/\, (t \cdot c0)$$

Je nach Art der Empfangsoptik 16 kann abweichend von dem Einfallswinkel φ der empfangene Strahl 11 gebeugt oder gebrochen sein, sodass ein entsprechender Faktor bei der Berechnung des Abstands ΔL berücksichtigt werden muss. Wenn der empfangene Strahl 11 auf die Detektorfläche 18 trifft, wird der empfangene Strahl 11 durch die Detektorpixel 20 mindestens ein elektronisches Signal in Form einer Spannung umgewandelt. Jedes Detektorpixel 20 erzeugt sein eigenes elektronisches Signal. Nach dem Auftreffen des empfangenen Strahls 11 auf die Detektorfläche 20 kann ohne umfangreiche Auswertung die Flugdauer t und damit auch der Abstand D des Objektes 10, 12, 14 bestimmt werden. Damit weitere Informationen wie beispielsweise Form des Strahls 11, Intensität des Strahls 11 und Reflektivität des Objektes 10, 12, 14 ermittelt werden können, ist eine weitere Auswertung notwendig. Da die Flugzeit bereits ermittelt wurde, kann ein Bereich 22, 24, 26 auf der Detektorfläche 20 für diese weitere Auswertung gewählt werden. Somit müssen nicht die Signale aller Detektorpixel 20 ausgewertet werden, sondern nur die elektronischen Signale der Detektorpixel 20, die unmittelbar den empfangenen Strahl 11 bzw. Strahlen 11 registriert haben. Vorteilhafterweise können auch benachbarte Detektorpixel 20 ebenfalls in den gewählten Bereich 22, 24, 26 einbezogen werden, um Toleranzen auszugleichen und um sicherzustellen, dass keine Informationen verloren gehen.

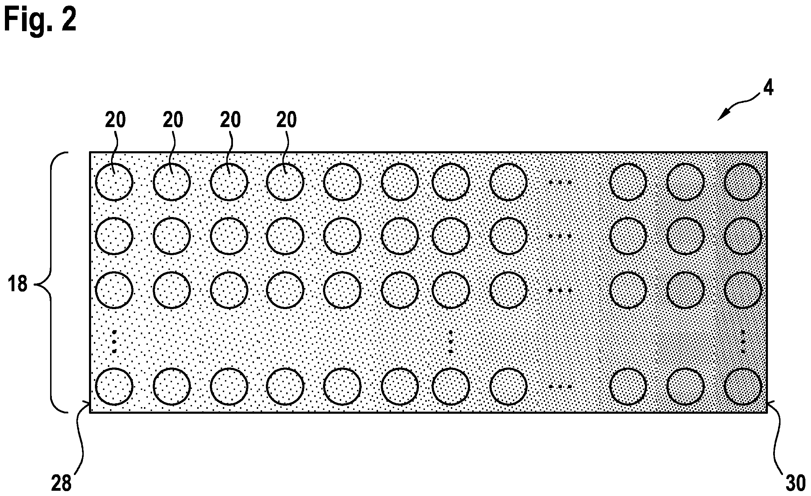

Die Figur 2 zeigt eine schematische Darstellung eines Detektors 4 gemäß einem zweiten Ausführungsbeispiel. Im Unterschied zum Detektor 4 gemäß dem ersten Ausführungsbeispiel, weist der Detektor 4 hier Detektorpixel 20 auf, die eine unterschiedliche Empfindlichkeit aufweisen. Hierbei ist die Empfindlichkeit auf einer linken Seite 28 der Detektorfläche 18 hoch, da hier die empfangenen Strahlen 11 von Objekten 14 auftreffen, die weiter von der Vorrichtung 1 entfernt sind. Auf einer rechten Seite 30 der Detektorfläche 18 sind die Detektorpixel 20 weniger sensitiv bzw. empfindlich, da hier die empfangenen Strahlen von Reflexen naher Objekte 10 auftreffen und somit die Intensität der empfangenen Strahlen 11 grundsätzlich hoch ist und eine Gefahr einer Übersättigung der Detektorpixel 20 in diesem Bereich besteht. Die Empfindlichkeit der Detektorpixel 20 ist hier linear von einer hohen Empfindlichkeit auf der linken Seite 28 zu einer niedrigen Empfindlichkeit auf der rechten Seite 30 eingestellt. Der Verlauf der Empfindlichkeit kann alternativ quadratisch oder exponentiell verlaufen.

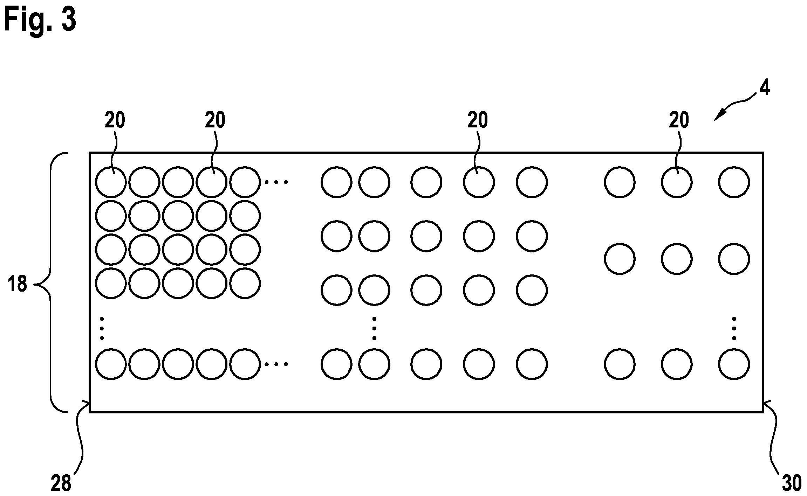

In der Figur 3 ist eine schematische Darstellung eines Detektors 4 gemäß einem dritten Ausführungsbeispiel dargestellt. Im Unterschied zum zweiten Ausführungsbeispiel wird hier die Empfindlichkeit der Detektorpixel 20 bzw. der Bereiche auf der Detektorfläche 18 über eine Detektorpixeldichte eingestellt. Das bedeutet, dass für das Detektieren eines Fernbereiches mehr Detektorpixel 20 zur Verfügung stehen und für einen Nahbereich weniger Detektorpixel 20 auf der Detektorfläche 18 genutzt werden.

**Patentansprüche**

1. Verfahren zum Abtasten eines Abtastwinkels und zum Auswerten eines Detektors (4) einer LiDAR-Vorrichtung, wobei

   - mindestens ein Strahl (7) durch eine Strahlenquelle (6) zum Abtasten des Abtastwinkels erzeugt wird,
   - mindestens ein an einem Objekt (10, 12, 14) reflektierter Strahl (9) durch eine Empfangsoptik (16) empfangen und auf eine Detektorfläche (18) des Detektors (4) gelenkt wird,
   - eine Flugdauer (t) des mindestens einen reflektierten Strahls (9) mit der LiDAR-Vorrichtung ermittelt wird,
   - der mindestens eine empfangene Strahl (11) zur Ermittlung weiterer Informationen des empfangenen Strahls (11), insbesondere Form des Strahls (11) oder Intensität des Strahls (11) oder Reflektivität des Objektes (10, 12, 14), ausgewertet wird,
   **dadurch gekennzeichnet, dass** mindestens ein Bereich (22, 24, 26) der Detektorfläche (18) zum Auswerten des mindestens einen empfangenen Strahls (11) zur Ermittlung der weiteren Informationen des empfangenen Strahls (11) abhängig von der ermittelten Flugdauer (t) des mindestens einen empfangenen Strahls (11) ausgewählt wird zur Reduzierung der Menge an Messwerten und Beschleunigung der Auswertung des empfangenen Strahls (11),
   wobei der mindestens eine Bereich (22, 24, 26) der Detektorfläche (18) abhängig von der Lichtgeschwindigkeit (c0), einer Brennweite (f) der Empfangsoptik (16) und einem Abstand (L) zwischen der Strahlenquelle (6) und der Empfangsoptik (16) gewählt wird.

2. Verfahren nach Anspruch 1, wobei abhängig von der ermittelten Flugdauer (t) des mindestens einen empfangenen Strahls (11) der mindestens eine ausgewählte Bereich (22, 24, 26) entlang der Detektorfläche (18) in mindestens einer Dimension verschoben wird.

3. Verfahren nach einem der Ansprüche 1 bis 2, wobei eine Empfindlichkeit der Detektorpixel (20) des Detektors (4) abhängig von der ermittelten Flugdauer (t) des mindestens einen empfangenen Strahls (11) gewählt wird.

4. Verfahren nach einem der Ansprüche 1 bis 3, wobei die Fläche des Bereiches (22, 24, 26) der Detektorfläche (18) abhängig von Störreflexen vergrößert oder verkleinert wird.

5. LIDAR-Vorrichtung (1) zum Durchführen des Verfahrens zum Abtasten eines Abtastwinkels und zum Auswerten eines Detektors (4) gemäß einem der vorhergehenden Ansprüche mit mindestens einer Strahlenquelle (6) zum Erzeugen mindestens eines Strahls (7), mit einer Einheit (8) zum Abstrahlen des erzeugten Strahls (7) in einen Abtastwinkel, mit einer Empfangsoptik (16) zum Empfangen von mindestens einem an einem Objekt (10, 12, 14) reflektierten Strahl (9) und zum Ablenken des empfangenen Strahls (11) auf eine Detektorfläche (18) eines Detektors (4) der LIDAR-Vorrichtung (1), die zum Ermitteln einer Flugdauer (t) des mindestens einen reflektierten Strahls (9) und zum Auswerten des mindestens einen durch die Empfangsoptik (16) empfangenen Strahls (11) zur Ermittlung weiterer Informationen des empfangenen Strahls (11), insbesondere Form des Strahls (11) oder Intensität des Strahls (11) oder Reflektivität des Objektes (10, 12, 14), eingerichtet ist,

   **dadurch gekennzeichnet, dass** abhängig von der ermittelten Flugdauer (t) des mindestens einen empfangenen Strahls (11) ein Bereich (22, 24, 26) der Detektorfläche (18) zum Auswerten des mindestens einen empfangenen Strahls (11) zur Ermittlung der weiteren Informationen des empfangenen Strahls (11) auswählbar ist zur Reduzierung der Menge an Messwerten und Beschleunigung der Auswertung des empfangenen Strahls (11),
   wobei der eine Bereich (22, 24, 26) der Detektorfläche (18) abhängig von der Lichtgeschwindigkeit (c0), einer Brennweite (f) der Empfangsoptik (16) und einem Abstand (L) zwischen der Strahlenquelle (6) und der Empfangsoptik (16) auswählbar ist.

6. LIDAR-Vorrichtung nach Anspruch 5, wobei die Detektorfläche (18) mindestens zwei über die Detektorfläche (18) verteilte Detektorpixel (20) aufweist.

7. LIDAR-Vorrichtung nach Anspruch 5 oder 6, wobei der Bereich (22, 24, 26) der Detektorfläche (18) mindestens einen Detektorpixel (20) aufweist.

8. LIDAR-Vorrichtung nach einem der Ansprüche 5 bis 7, wobei eine Empfindlichkeit der Detektorpixel (20) entlang der Detektorfläche (18) variabel ausgeführt ist.

**9.** LIDAR-Vorrichtung nach Anspruch 8, wobei die Empfindlichkeit der Detektorpixel (20) entlang des Detektors (4) an die ermittelte Flugdauer (t) des mindestens einer empfangenen Strahls (11) anpassbar ist.

**10.** LIDAR-Vorrichtung nach einem der Ansprüche 5 bis 9, wobei der Bereich (22, 24, 26) des Detektors (4) eine Spalte aus mindestens einem Detektorpixel (20) ist.

**Claims**

**1.** Method for scanning a scanning angle and for evaluating a detector (4) of a lidar apparatus, wherein

- at least one beam (7) is created by a beam source (6) for scanning the scanning angle,
- at least one beam (9) that has been reflected at an object (10, 12, 14) is received by receiver optics (16) and directed to a detector area (18) of the detector (4),
- a time-of-flight (t) of the at least one reflected beam (9) is ascertained using the lidar apparatus,
- the at least one received beam (11) is evaluated for the purpose of ascertaining further information regarding the received beam (11), in particular the shape of the beam (11) or the intensity of the beam (11) or the reflectivity of the object (10, 12, 14),
**characterized in that**, in order to reduce the amount of measurement values and accelerate the evaluation of the received beam (11), at least one region (22, 24, 26) of the detector area (18) is selected on the basis of the ascertained time-of-flight (t) of the at least one received beam (11) for the purpose of evaluating the at least one received beam (11) for the purpose of ascertaining the further information regarding the received beam (11),
wherein the at least one region (22, 24, 26) of the detector area (18) is chosen on the basis of the speed of the light (c0), a focal length (f) of the receiver optics (16) and a distance (L) between the beam source (6) and the receiver optics (16).

**2.** Method according to Claim 1, wherein the at least one selected region (22, 24, 26) is displaced along the detector area (18) in at least one dimension, depending on the ascertained time-of-flight (t) of the at least one received beam (11).

**3.** Method according to either of Claims 1 and 2, wherein a sensitivity of the detector pixels (20) of the detector (4) is chosen depending on the ascertained time-of-flight (t) of the at least one received beam (11).

**4.** Method according to any of Claims 1 to 3, wherein the area of the region (22, 24, 26) of the detector area (18) is increased or reduced depending on disturbing reflections.

**5.** Lidar apparatus (1) for carrying out the method for scanning a scanning angle and for evaluating a detector (4) according to any of the preceding claims, having at least one beam source (6) for creating at least one beam (7), having a unit (8) for transmitting the created beam (7) into a scanning angle, having receiver optics (16) for receiving at least one beam (9) that has been reflected at an object (10, 12, 14) and for deflecting the received beam (11) to a detector area (18) of a detector (4) of the lidar apparatus (1) which is configured to ascertain a time-of-flight (t) of the at least one reflected beam (9) and to evaluate the at least one beam (11) received by the receiver optics (16), for the purpose of ascertaining further information regarding the received beam (11), in particular the shape of the beam (11) or the intensity of the beam (11) or the reflectivity of the object (10, 12, 14), **characterized in that** in order to reduce the amount of measurement values and accelerate the evaluation of the received beam (11), a region (22, 24, 26) of the detector area (18) is selectable on the basis of the ascertained time-of-flight (t) of the at least one received beam (11), for the purpose of evaluating the at least one received beam (11) for the purpose of ascertaining the further information regarding the received beam (11), wherein the one region (22, 24, 26) of the detector area (18) is selectable on the basis of the speed of the light (c0), a focal length (f) of the receiver optics (16) and a distance (L) between the beam source (6) and the receiver optics (16).

**6.** Lidar apparatus according to Claim 5, wherein the detector area (18) comprises at least two detector pixels (20) which are distributed over the detector area (18).

**7.** Lidar apparatus according to Claim 5 or 6, wherein the region (22, 24, 26) of the detector area (18) comprises at least one detector pixel (20).

**8.** Lidar apparatus according to any of Claims 5 to 7, wherein a sensitivity of the detector pixels (20) is designed to vary along the detector area (18).

**9.** Lidar apparatus according to Claim 8, wherein the sensitivity of the detector pixels (20) along the detector (4) is adjustable to the ascertained time-of-flight (t) of the at least one received beam (11).

**10.** Lidar apparatus according to any of Claims 5 to 9, wherein the region (22, 24, 26) of the detector (4) is a column of at least one detector pixel (20).

**Revendications**

**1.** Procédé permettant de balayage un angle de balayage et d'évaluer un détecteur (4) d'un dispositif LiDAR, dans lequel

- au moins un faisceau (7) est produit par une source de rayonnement (6) pour balayer l'angle de balayage,
- au moins un faisceau (9) réfléchi sur un objet (10, 12, 14) est reçu par une optique de réception (16) et est dirigé sur une surface de détecteur (18) du détecteur (4),
- un temps de vol (t) dudit au moins un faisceau réfléchi (9) est établi à l'aide du dispositif LiDAR,
- ledit au moins un faisceau reçu (11) est évalué pour établir des informations supplémentaires sur le faisceau reçu (11), en particulier la forme du faisceau (11) ou l'intensité du faisceau (11) ou la réflectivité de l'objet (10, 12, 14), **caractérisé en ce qu'**au moins une zone (22, 24, 26) de la surface de détecteur (18) est sélectionnée pour évaluer ledit au moins un faisceau reçu (11) afin d'établir les informations supplémentaires sur le faisceau reçu (11) en fonction du temps de vol (t) établi dudit au moins un faisceau reçu (11) afin de réduire la quantité de valeurs de mesure et d'accélérer l'évaluation du faisceau reçu (11), dans lequel ladite au moins une zone (22, 24, 26) de la surface de détecteur (18) est sélectionnée en fonction de la vitesse de la lumière (c0), d'une focale (f) de l'optique de réception (16) et d'une distance (L) entre la source de rayonnement (6) et l'optique de réception (16).

**2.** Procédé selon la revendication 1, dans lequel, en fonction du temps de vol (t) établi dudit au moins un faisceau reçu (11), ladite au moins une zone sélectionnée (22, 24, 26) est décalée le long de la surface de détecteur (18) dans au moins une dimension.

**3.** Procédé selon l'une quelconque des revendications 1 à 2, dans lequel une sensibilité des pixels de détecteur (20) du détecteur (4) est sélectionnée en fonction du temps de vol (t) établi dudit au moins un faisceau reçu (11).

**4.** Procédé selon l'une quelconque des revendications 1 à 3, dans lequel la surface de la zone (22, 24, 26) de la surface de détecteur (18) est augmentée ou diminuée en fonction de reflets parasites.

**5.** Dispositif LiDAR (1) pour exécuter le procédé permettant de balayer un angle de balayage et d'évaluer un détecteur (4) selon l'une quelconque des revendications précédentes, comprenant au moins une source de rayonnement (6) pour produire au moins un faisceau (7), une unité (8) pour émettre le faisceau produit (7) dans un angle de balayage, une optique de réception (16) pour recevoir au moins un faisceau (9) réfléchi sur un objet (10, 12, 14) et pour dévier le faisceau reçu (11) sur une surface de détecteur (18) d'un détecteur (4) du dispositif LiDAR (1) qui est conçu pour établir un temps de vol (t) dudit au moins un faisceau réfléchi (9) et pour évaluer ledit au moins un faisceau (11) reçu par l'optique de réception (16) afin d'établir des informations supplémentaires sur le faisceau reçu (11), en particulier sous la forme du faisceau (11) ou de l'intensité du faisceau (11) ou de la réflectivité de l'objet (10, 12 14), **caractérisé en ce qu'**en fonction du temps de vol (t) établi dudit au moins un faisceau reçu (11), une zone (22, 24, 26) de la surface de détecteur (18) peut être sélectionnée pour évaluer ledit au moins un faisceau reçu (11) afin d'établir les informations supplémentaires du faisceau reçu (11) afin de réduire la quantité de valeurs de mesure et d'accélérer l'évaluation du faisceau reçu (11), dans lequel ladite une zone (22, 24, 26) de la surface de détecteur (18) peut être sélectionnée en fonction de la vitesse de la lumière (c0), d'une focale (f) de l'optique de réception (16) et d'une distance (L) entre la source de rayonnement (6) et l'optique de réception (16).

**6.** Dispositif LiDAR selon la revendication 5, dans lequel la surface de détecteur (18) présente au moins deux pixels de détecteur (20) répartis sur la surface de détecteur (18).

**7.** Dispositif LiDAR selon la revendication 5 ou 6, dans lequel la zone (22, 24, 26) de la surface de détecteur (18) présente au moins un pixel de détecteur (20).

**8.** Dispositif LiDAR selon l'une quelconque des revendications 5 à 7, dans lequel une sensibilité des pixels de détecteur (20) est réalisée de manière variable le long de la surface de détecteur (18).

**9.** Dispositif LiDAR selon la revendication 8, dans lequel la sensibilité des pixels de détecteur (20) le long du détecteur (4) peut être adaptée au temps de vol (t) établi du au moins un faisceau (11) reçu.

**10.** Dispositif LiDAR selon l'une quelconque des revendications 5 à 9, dans lequel la zone (22, 24, 26) du détecteur (4) est une colonne d'au moins un pixel de détecteur (20).

Fig. 1

**Fig. 2**

EP 3 607 348 B1

**Fig. 3**

EP 3 607 348 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20160123764 A1
- WO 2011029651 A1

- DE 102015205826 A1